# EUROPEAN PATENT SPECIFICATION

(11) **EP 2 939 853 B1**
(45) Date of publication and mention of the grant of the patent: **21.02.2018**
(21) Application number: 13868079.8
(22) Date of filing: 04.12.2013
(51) Int. Cl.: B60C 11/11, B60C 11/00, B60C 11/03, B60C 11/04

(54) **PNEUMATIC TIRE**
LUFTREIFEN
BANDAGE PNEUMATIQUE

(30) Priority: 26.12.2012 JP 2012282279
(43) Date of publication of application: 04.11.2015
(73) Proprietor: The Yokohama Rubber Co., Ltd., Minato-ku Tokyo 105-8685 (JP)
(72) Inventor: NIWA, Masakazu, Hiratsuka-shi Kanagawa 254-8601 (JP)
(74) Representative: Dilg, Haeusler, Schindelmann Patentanwaltsgesellschaft mbH
(86) International application number: PCT/JP2013/082614
(87) International publication number: WO 2014/103643

(56) References cited:
- EP-A1- 2 335 947
- JP-A- H04 208 607
- JP-A- H07 164 829
- JP-A- H07 164 829
- JP-A- S60 169 305
- JP-A- 2002 052 907
- JP-A- 2010 274 695
- US-A1- 2009 255 616

## Description

### TECHNICAL FIELD

The present invention relates to a pneumatic tire ideal for driving on wet road surfaces, and more particularly relates to a pneumatic tire that exhibits excellent wet performance and can reduce damage to the tread portion.

### BACKGROUND

A directional tread pattern in a pneumatic tire has been proposed in which a plurality of main grooves is provided extending in the tire circumferential direction in the tread portion, and a plurality of inclined grooves is provided that extends outwards to both sides in the tire width direction while inclined in the opposite direction to a designated rotational direction (for example, see Patent Document 1, JP H06-24213A).

EP 2 335 947 A1 discloses a pneumatic tire, wherein sipes extending in the width direction of the tire are arranged at intervals in the circumferential direction of the tire at least in shoulder blocks divided by longitudinal grooves extending in the circumferential direction of the tire and by lateral grooves extending in the width direction of the tire. Open sipes and closed sipes are alternately arranged, and the depth of the open sipes is less than the depth of the closed sipes.

US 2009/0255616 A1 discloses a pneumatic tire which includes: a tread portion provided with groove portions and land portions; and sipes provided in the land portions. Each of the sipes has at least one end, in a longitudinal direction, being terminated within the corresponding land portion. Each sipe is provided with: a first offset portion protruding toward one side in a sipe thickness direction; and a second offset portion protruding toward the other side in the sipe thickness direction at a position on an inner side, in a tire radial direction, of a position at which the first offset portion protrudes.

JP H07-164829 A discloses a tire which has a plurality of main grooves and a plurality of sub-grooves which are inclined and extend toward the shoulder regions on the left and right sides.

A pneumatic tire provided with a directional tread pattern of this type effectively drains water based on the plurality of main grooves and the plurality of inclined grooves, so it can exhibit excellent wet performance. However, on the other hand it has the disadvantage that when a large force
acts on the tread pattern from the road surface, the blocks that have been segmentalized by the main grooves and the inclined grooves are easily damaged.

For example, touring cars (racing cars based on commercial cars) have tire sizes that are small for their vehicle weight, so a large force acts on the tread portion from the road surface, and there is a tendency for damage to the blocks that have been segmentalized in the tread portion to increase. In particular, this block damage is significant near the tire equator line. Therefore, in this type of tire, there is a strong demand for a reduction in damage to the tread portion while maintaining good wet performance.

### PRIOR ART DOCUMENT

### Patent Document

Patent Document 1: Japanese Unexamined Patent Application Publication No. H06-24213A

### SUMMARY OF THE INVENTION

### Problems to be Solved by the Invention

It is an object of the present invention to provide a pneumatic tire that exhibits excellent wet performance and that is capable of reducing the damage in the tread portion.

### Means to Solve the Problem

The pneumatic tire according to the present invention to achieve the above object is a pneumatic tire having a designated rotational direction, comprising: a ring-shaped tread portion that extends in a tire circumferential direction; a pair of side wall portions disposed on both sides of the tread portion; and a pair of bead portions disposed on an inside in the tire radial direction of the side wall portions, wherein at least four main grooves are provided in the tread portion extending in the tire circumferential direction, a center land portion located on a tire equator line in the tread portion, shoulder land portions located at shoulder regions of the tread portion, and intermediate land portions located between the center land portion and the shoulder land portions are segmentalized by the main grooves, the center land portion has a rib structure in the tire circumferential direction, a plurality of first inclined grooves is provided from a position near the tire equator line in the center land portion extending to an outside in the tire width direction at an inclination to a direction opposite to the rotational direction and reaching at least as far as a ground contact edge, first inclined grooves extending in a first direction in the tire width direction and first inclined grooves extending in a second direction in the tire width direction are disposed alternately in the tire circumferential direction, a plurality of second inclined grooves is provided extending from the intermediate land portions to the outside in the tire width direction at an inclination to the direction opposite to the rotational direction and reaching at least as far as the ground contact edge, second inclined grooves extending in a first direction in the tire width direction and second inclined grooves extending in a second direction in the tire width direction are disposed alternately in the tire circumferential direction, and the first inclined grooves and the second inclined grooves are disposed alternately in the tire circumferential direction.

In the present invention, at least 4 main grooves are provided in the tread portion extending in the tire circumferential direction, the plurality of first inclined grooves extending from positions near the tire equator line in the center land portion to the outside in the tire width direction at least as far as the ground contact edge while inclined in the opposite direction to the rotational direction, and the plurality of second inclined grooves extending from the intermediate land portions to the outside in the tire width direction at least as far as the ground contact edge while inclined in the opposite direction to the rotational direction are provided in the tread portion, so it is possible to exhibit excellent wet performance based on these main grooves and first inclined grooves and second inclined grooves.

On the other hand, the center land portion has a continuous rib structure in the tire circumferential direction, so the stiffness of the center land portion is increased, and the intermediate land portions are configured so that they are not divided by the second inclined grooves, so it is possible to reduce the damage to the tread portion, even when the load on the tread portion is large.

The first inclined grooves and the second inclined grooves can extend passing across the shoulder land portions. In this case, sufficient water drainage properties are ensured based on the first inclined grooves and the second inclined grooves, so it is possible to configure a tread pattern that emphasizes wet performance under conditions in which a water film having a certain depth of water is formed on the road surface.

Also, the second inclined grooves can extend passing across the shoulder land portions, and on the other hand the first inclined grooves can terminate within the shoulder land portions. In this case, sufficient stiffness is ensured in the shoulder land portions, so it is possible to configure a tread pattern that emphasizes wet performance under wet conditions in which there is almost no water film on the road surface.

In the present invention, the tread pattern may be configured as follows. Namely, preferably the pitch L in the tire circumferential direction of the first inclined grooves is from 80 mm to 150 mm. Preferably pitches La, Lb in the tire circumferential direction between the first inclined grooves and the second inclined grooves are each from 40 mm to 75 mm. Preferably inclination angles α, β of the first inclined grooves and the second inclined grooves with respect to the tire circumferential direction are each from 50° to 80°. In the center land portion, preferably the distance Wa1 between the tire equator line and the tip of the first inclined groove in the tire width direction satisfies -8 mm ≤ Wa1 ≤ 8 mm. Also, in the center land portion, preferably the distance Wa2 in the tire width direction between the tip of the first inclined groove and the edge of the center land portion facing the tip satisfies 5 mm ≤ Wa2. On the other hand, in the intermediate land portions, preferably the distance Wb1 between the tip of the second inclined groove and the center position in the width direction of the intermediate land portion satisfies -5 mm ≤ Wb1. Also, in the intermediate land portion, preferably the distance Wb2 in the tire width direction between the tip of the second inclined groove and the edge of the intermediate land portion facing the tip satisfies 5 mm ≤ Wb2. In this way, it is possible to obtain to the maximum extent the effect of reduction in damage of the tread portion while exhibiting excellent wet performance.

In the present invention, preferably a carcass layer that includes a plurality of reinforcing cords that are inclined with respect to the tire radial direction is disposed between the pair of bead portions, and the angle of inclination of the reinforcing cords of the carcass layer with respect to the tire radial direction at the tire maximum width position is from 4° to 30°. Pneumatic tires having this type of carcass structure have a high stiffness which is effective in competitions such as races and the like. When the present invention is applied to racing tires in which a large load is applied to the tread portion, a significant effect can be obtained.

Preferably the groove area ratio of the tread portion is from 35% to 55%. Also, preferably the cap tread rubber layer provided in the tread portion has a JIS hardness of from 50 to 65. In this way, it is possible to exhibit excellent wet performance while ensuring good resistance to damage of the tread portion. In the present invention, the JIS hardness is the durometer hardness measured in accordance with JIS K-6253 using a type A durometer and under a temperature of 20°C.

In the present invention, the "ground contact edge" is the position of the outside edge in the tire axis direction of the contact surface with a flat surface when the tire is fitted to a regular rim, filled with the regular air pressure, placed statically upright on the flat surface, and the regular load is applied. "Regular rim" is a rim defined by a standard for each tire according to a system of standards that includes standards on which tires are based, and refers to a "standard rim" in the case of JATMA, refers to a "design rim" in the case of TRA, and refers to a "measuring rim" in the case of ETRTO. "Regular inner pressure" is the air pressure defined by standards for each tire according to a system of standards that includes standards on which tires are based, and refers to a "maximum air pressure" in the case of JATMA, refers to the maximum value in the table of "TIRE ROAD LIMITS AT VARIOUS COLD INFLATION PRESSURES" in the case of TRA, and refers to the "inflation pressure" in the case of ETRTO. "Regular inner pressure" is 180 kPa for a tire on a passenger vehicle. "Regular load" is the load defined by the standard for each tire according to a system of standards that includes standards on which tires are based, and refers to the load defined as the maximum load capacity in the case of JATMA, the load defined as the maximum value in the table of "TIRE ROAD LIMITS AT VARIOUS COLD INFLATION PRESSURES" in the case of TRA, or the load defined as the "load capacity" in the case of ETRTO; the "regular load" for a tire on a passenger vehicle being 88% thereof.

### BRIEF DESCRIPTION OF THE DRAWINGS

- FIG. 1: is a meridian cross-sectional view illustrating a pneumatic tire according to an embodiment of the present invention.
- FIG. 2: is a plan view illustrating the tread pattern of the pneumatic tire of FIG. 1.
- FIG. 3: is a plan view illustrating a modified example of the pneumatic tire according to the present invention.
- FIG. 4: is a plan view illustrating the dimensional requirements of the tread pattern of the pneumatic tire according to the present invention.
- FIG. 5: is a plan view illustrating a tread pattern of a conventional pneumatic tire.

### DETAILED DESCRIPTION

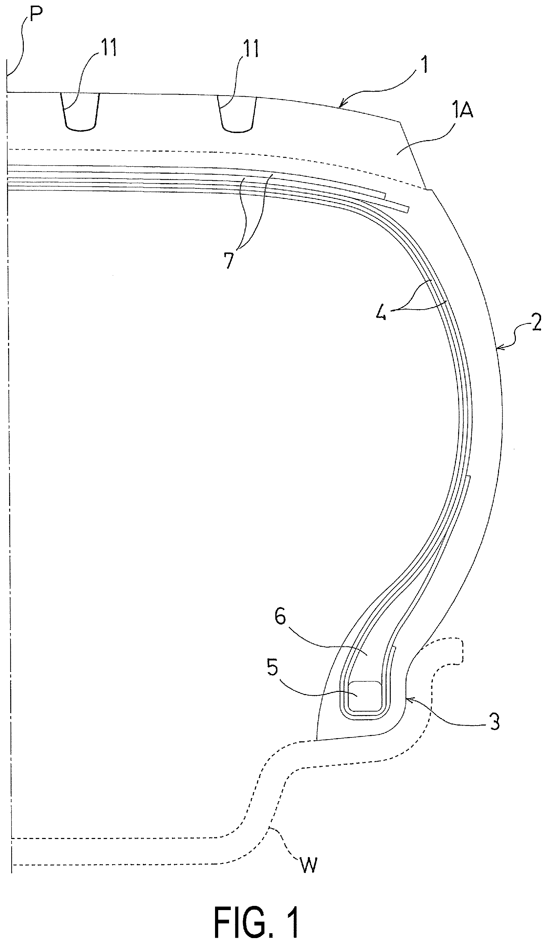

Detailed descriptions will be given below of a configuration of the present invention with reference to the accompanying drawings. FIGS. 1 to 3 illustrate a pneumatic tire according to an embodiment of the present invention. The pneumatic tire according to the present embodiment is a tire with a designated rotational direction R. In FIG. 1, one side portion is illustrated bounded by the tire equatorial plane P that includes the tire equator line E, but the pneumatic tire according to the present embodiment has an internal structure that is symmetrical on both sides of the tire equatorial plane P. Also, W is the rim of a wheel on which the pneumatic tire is fitted.

As illustrated in FIG. 1, a pneumatic tire of this embodiment is provided with a tread portion 1 extending in the tire circumferential direction to form an annular shape, a pair of side wall portions 2 that are disposed on both sides of the tread portion 1, and a pair of bead portions 3 that are disposed on the inner side in the tire radial direction of the side wall portions 2.

Two layers of a carcass layer 4 are mounted between the pair of bead portions 3, 3. The carcass layer 4 includes a plurality of reinforcing cords that incline with respect to the tire radial direction and the reinforcing cords are disposed between the layers so as to intersect each other. In the carcass layer 4, the inclination angle of the reinforcing cords with respect to the tire radial direction is set in a range from, for example, 4° to 30°. Here, the inclination angle of the reinforcing cords of the carcass layer 4 is the angle measured at the position of the tire maximum width. The carcass layer 4 is folded back around a bead core 5 disposed in each of the bead portions 3 from the tire inner side to the tire outer side. Organic fiber cords are preferably used as the reinforcing cords of the carcass layer 4. A bead filler 6 having a triangular cross-sectional shape formed from rubber composition is disposed on a periphery of the bead core 5.

On the other hand, a plurality of layers of a belt layer 7 is embedded on an outer circumferential side of the carcass layer 4 in the tread portion 1. These belt layers 7 include a plurality of reinforcing cords that incline with respect to the tire circumferential direction and the reinforcing cords are disposed between the layers so as to intersect each other. In the belt layers 7, an inclination angle of the reinforcing cords with respect to the tire circumferential direction is set in a range from, for example, 10° to 40°. Steel cords are preferably used as the reinforcing cords of the belt layers 7. For the purpose of enhancing high-speed durability, at least one layer of a belt cover layer formed by arranging reinforcing cords at an angle of not more than 5° with respect to the tire circumferential direction, may be disposed on the outer circumferential side of the belt layers 7. The belt cover layer preferably has a jointless structure in which a strip material made from a single reinforcing cord laid in parallel and covered with rubber is wound continuously in the tire circumferential direction. Also, the belt cover layer can be disposed so as to cover the belt layer 7 in the width direction at all positions, or can be disposed to cover only the edge portions of the belt layer 7 to the outside in the width direction. Nylon, aramid, or similar organic fiber cords are preferably used as the reinforcing cords of the belt cover layer.

Note that the tire internal structure described above is exemplary of a pneumatic tire, but is not limited thereto.

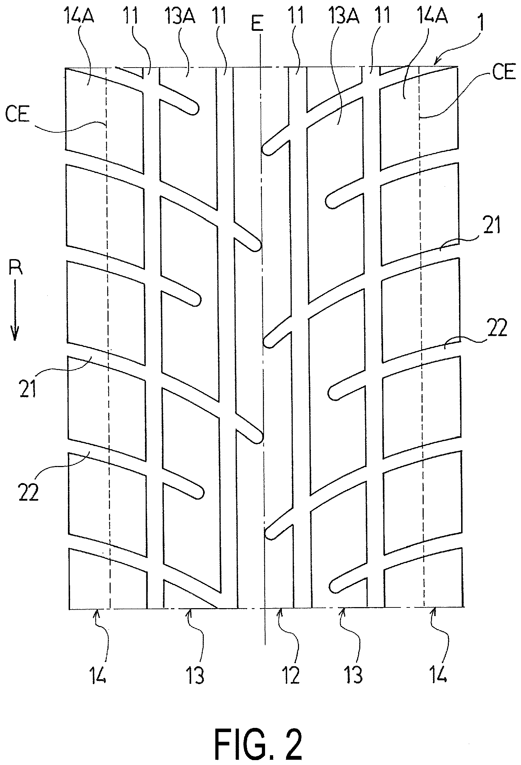

As illustrated in FIG. 2, four main grooves 11 extending in the tire circumferential direction are formed in the tread portion 1, and a center land portion 12 located on the tire equator line E (tire center line) in the tread portion 1, a pair of shoulder land portions 14 located in the shoulder regions of the tread portion 1, and intermediate land portions 13 located between the center land portion 12 and the shoulder land portions 14 are partitioned by these four main grooves 11.

Also, a plurality of inclined grooves 21 (first inclined grooves) extending from positions near the tire equator line E in the center land portion 12 to the outside in the tire width direction at least as far as the ground contact edge CE while inclined in the opposite direction to the rotational direction R, and a plurality of inclined grooves 22 (second inclined grooves) extending from the intermediate land portions 13 to the outside in the tire width direction at least as far as the ground contact edge CE while inclined in the opposite direction to the rotational direction R are formed in the tread portion 1. The plurality of inclined grooves 21 includes grooves extending to a first side (for example, the right side in the drawing) of the tire width direction and grooves extending to a second side (for example, the left side in the drawing) in the tire width direction, and these are disposed alternately along the tire circumferential direction. Likewise, the plurality of inclined grooves 22 includes grooves extending to the first side (for example, the right side in the drawings) of the tire width direction and grooves extending to the second side (for example, the left side on the drawings) in the tire width direction, and these are disposed alternately along the tire circumferential direction. Moreover, the inclined grooves 21, 22 are disposed alternately along the tire circumferential direction.

In the tread portion 1, the center land portion 12 has a continuous rib structure in the tire circumferential direction. On the other hand, the intermediate land portions 13 are configured from a plurality of blocks 13A divided by the inclined grooves 21, and the shoulder land portions 14 are configured from a plurality of blocks 14A divided by the inclined grooves 21, 22.

According to the pneumatic tire described above, at least 4 main grooves 11 extending in the tire circumferential direction, the plurality of inclined grooves 21 extending from positions near the tire equator line E in the center land portion 12 to the outside in the tire width direction at least as far as the ground contact edge CE while inclined in the opposite direction to the rotational direction R, and the plurality of inclined grooves 22 extending from the intermediate land portions 13 to the outside in the tire width direction at least as far as the ground contact edge CE while inclined in the opposite direction to the rotational direction R are provided in the tread portion 1, so it is possible to exhibit excellent wet performance based on these main grooves 11 and inclined grooves 21, 22.

On the other hand, the stiffness of the center land portion 12 is increased by the continuous rib structure in the tire circumferential direction of the center land portion 12, and the intermediate land portions 13 are configured so that they are not divided by the inclined grooves 22 (a configuration that includes elongated blocks 13A), so for example, even when the load on the tread portion 1 is large as in the case of racing tires, it is difficult for damage to occur to the rib structure of the center land portion 12 or the block structure of the intermediate land portions 13. In this way, it is possible to exhibit excellent wet performance and reduce damage to the tread portion 1.

In the embodiment described above, the inclined grooves 21, 22 extend passing across the shoulder land portion 14, so in this case sufficient water drainage properties are ensured based on the inclined grooves 21, 22, so it is possible to configure a tread pattern that emphasizes wet performance under conditions in which a water film having a certain depth of water is formed on the road surface.

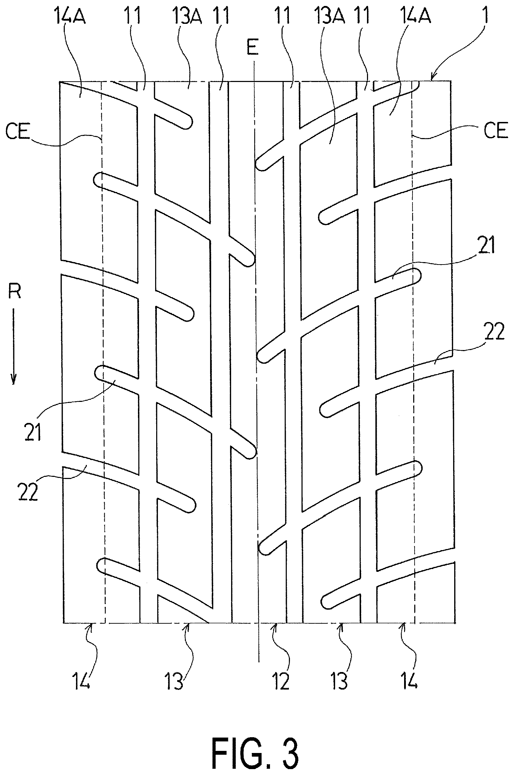

As a modified example of tread pattern, as shown in FIG. 3, the inclined grooves 22 can extend passing across the shoulder land portion 14, and on the other hand the inclined grooves 21 can terminate within the shoulder land portion 14. In this case, sufficient stiffness is ensured in the shoulder land portion 14, so it is possible to configure a tread pattern that emphasizes wet performance under wet conditions in which there is almost no water film on the road surface. In other words, under road surface conditions in which it is not necessary to drain a large quantity of water to the outside of the tread portion 1, wet performance is not reduced even if the inclined grooves 21 are terminated within the shoulder land portion 14, and it is possible to increase the effect of reduction in damage to the tread portion 1.

In the pneumatic tire according to the embodiment described above, the two layer carcass layer 4 that includes the plurality of reinforcing cords inclined with respect to the tire radial direction is provided between the pair of bead portions 3, 3, the reinforcing cords of the carcass layer 4 are disposed intersecting each other between layers, and the inclination angle of the reinforcing cords of the carcass layer 4 at the maximum tire width position is from 4° and 30°, and this type of carcass structure has a high stiffness which is effective in competitions such as races and the like. Also, in pneumatic tires in which the load on the tread portion 1 is large as represented by racing tires, there is a strong demand to exhibit excellent wet performance while reducing damage to the tread portion 1.

In the pneumatic tire described above, the groove area ratio in the tread portion 1 may be set in the range of 35% to 55%. In this way, it is possible to exhibit excellent wet performance while ensuring good resistance to damage of the tread portion 1. If the groove area ratio is less than 35% the wet performance is reduced, and conversely if it exceeds 55% the resistance to damage of the tread portion 1 is reduced. The groove area ratio is the ratio of the groove area to the area of the ground contact region (including the groove area) defined between the ground contact edges of the tread portion 1.

Also, in the pneumatic tire described above, the JIS hardness of a cap tread rubber layer 1A disposed on the tread portion 1 may be set in the range of 50 to 65. In this way, it is possible to exhibit excellent wet performance while ensuring good resistance to damage of the tread portion 1. If the JIS hardness of the cap tread rubber layer 1A is less than 50, the resistance to damage of the tread portion 1 is reduced, and conversely if it exceeds 65 the wet resistance is reduced.

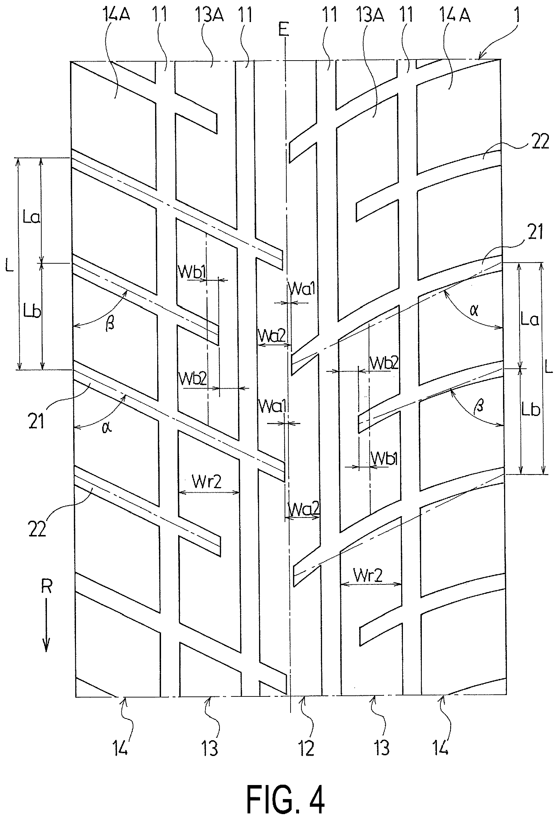

FIG. 4 shows the specific dimensional requirements of the tread pattern of the pneumatic tire according to the present invention. In FIG. 4, preferably the pitch L in the tire circumferential direction of the inclined grooves 21 is from 80 mm to 150 mm, and more preferably from 90 mm to 130 mm. If the pitch length L is too large the wet performance (in particular, the water drainage properties) is reduced, and conversely if it is too small the resistance to damage of the tread portion 1 is reduced.

Preferably the pitches La, Lb in the tire circumferential direction between the inclined grooves 21 and the inclined grooves 22 are each from 40 mm to 75 mm, and more preferably are from 45 mm to 65 mm. In other words, if there is a large difference in the size of the block portions partitioned by the inclined grooves 21, 22, the smaller blocks can easily be damaged preferentially, and, the smaller blocks can easily wear preferentially.

The inclination angles α, β of the inclined grooves 21 and the inclined grooves 22 with respect to the tire circumferential direction are preferably each from 50° to 80°, and more preferably from 60° to 70°. If the inclination angles α, β are too small, the stiffness in the tire width direction of the block portions partitioned by the inclined grooves 21, 22 is reduced, so damage can easily occur, and conversely if they are too large the wet performance (in particular, the water drainage properties) is reduced. The inclination angles α, β are the inclination angles with respect to the tire circumferential direction of the straight lines connecting the two ends of the inclined grooves 21 and the inclined grooves 22.

In the center land portion 12, the distance Wa1 between the tire equator line E and the tip of the inclined groove 21 in the tire width direction satisfies preferably -8 mm ≤ Wa1 ≤ 8 mm, and more preferably -5 mm ≤ Wa1 ≤ 5 mm. In this case, a minus sign means the inclined grooves 21 pass across the tire equator line E, and a plus sign means the inclined grooves 21 do not pass across the tire equator line E. If the length of the portion of the inclined grooves 21 that extends across the tire equator line E is too long, the stiffness of the center land portion 12 is reduced and damage can easily occur, and conversely if the separation distance between the inclined grooves 21 and the tire equator line E is too large wet performance is reduced.

Also, in the center land portion 12, preferably the distance Wa2 in the tire width direction between the tip of the inclined groove 21 and the edge of the center land portion 12 facing the tip satisfies 5 mm ≤ Wa2. If the inclined grooves 21 extend close to the edge of the center land portion 12, the stiffness of the center land portion 12 is reduced and damage can easily occur.

In the intermediate land portions 13, preferably the distance Wb1 between the tip of the inclined groove 22 and the center position in the width direction of the intermediate land portion 13 satisfies -5 mm ≤ Wb1, and more preferably is -5 mm≤Wb1≤5 mm. In this case, the minus sign means that the inclined groove 22 passes across the center position in the width direction of the intermediate land portion 13, and the plus sign means that the inclined groove 22 does not pass across the center position in the width direction of the intermediate land portion 13. If the length of the portion of the inclined groove 22 that extends beyond the center position in the width direction of the intermediate land portion 13 is too long, the stiffness of the intermediate land portion 13 is reduced and damage can easily occur, and conversely if the separation distance between the inclined groove 22 and the center position in the width direction of the intermediate land portion 13 is too large the wet performance is reduced.

Also, in the intermediate land portion 13, preferably the distance Wb2 in the tire width direction between the tip of the inclined groove 22 and the edge of the intermediate land portion 13 facing the tip satisfies 5 mm ≤ Wb2. If the inclined groove 22 extends close to the edge of the intermediate land portion 13, the stiffness of the intermediate land portion 13 is reduced and damage can easily occur.

By appropriately adjusting the inclined grooves 21, 22 to the dimensional requirements in this way, it is possible to achieve a higher dimension of the wet performance and the damage resistance.

### EXAMPLES

A tire according to Working Example 1 that includes the tire internal structure shown in FIG. 1 and the tread pattern shown in FIG. 2 was produced to the tire size 240/610R17.

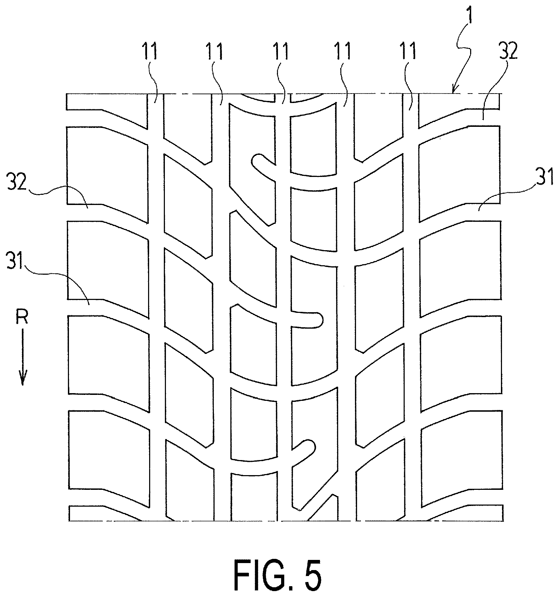

For comparison, a tire according to Comparative Example 1 that includes the tire internal structure shown in FIG. 1 and the tread pattern shown in FIG. 5 was produced. In FIG. 5, in the tread portion 1, five main grooves 11 extending in the tire circumferential direction, a plurality of inclined grooves 31 that extend in the tire width direction passing across the tread portion, and a plurality of inclined grooves 32 that extend from near the tire equator line to the outside in the tire width direction are formed, and the inclined grooves 31, 32 are disposed alternately along the tire circumferential direction.

In Working Example 1 and Comparative Example 1, the inclination angle with respect to the tire radial direction of the reinforcing cords of the carcass layer at the position of the tire maximum width was 25°, the tread area ratio of the tread portion was 39%, and the JIS hardness of the cap tread rubber layer was 58.

The wet performance under a water depth of 2 mm and the damage resistance of the tread portion were evaluated by the evaluation methods described below for test tires of Working Example 1 and Comparative Example 1, and the results are shown in Table 1.

### Wet performance (Water depth of 2 mm):

Each test tire was assembled onto a wheel with a rim size 17x9JJ, and fitted to a front wheel drive vehicle of engine displacement 1600 cc fitted with a supercharger, with air pressure 220 kPa, and the wet performance (driving stability, driving time) was evaluated on a test course with a wet road surface with a water depth of 2 mm obtained by sprinkling water. The driving stability was evaluated by carrying out sensory evaluation by the test driver, and the evaluation results were expressed as an index with Comparative Example 1 as 100. Larger index values indicate superior steering stability. Also, the driving time was measured as the time required to travel in a section, and the evaluation results were expressed as an index using the inverse of the measured value and Comparative example 1 as 100. Larger index values indicate a shorter driving time.

### Tread portion damage resistance:

After performing the driving tests as described above, the status of damage on the tread portions of each test tire was inspected visually, and the resistance to damage of the center land portion, the intermediate land portions and the shoulder land portions were each evaluated. The evaluation results and the damage status were expressed based on a five point method in which the evaluation was classified into five levels. The larger the evaluation points the less the damage.

**[Table 1]**

| | | Comparative Example 1 | Working Example 1 |
|---|---|---|---|
| Tread pattern | | FIG. 5 | FIG. 2 |
| Wet performance (water depth 2 mm) | Steering stability | 100 | 104 |
| | Driving time | 100 | 103 |
| Tread portion damage resistance | Center land portion | 2 | 4 |
| | Intermediate land portion | 2 | 4 |
| | Shoulder land portion | 4 | 4 |

As can be seen from Table 1, the tire according to Working Example 1 has better wet performance compared with Comparative Example 1, and moreover has better damage resistance in the tread portion.

Next, tires according to Working Example 2 were produced with the tire internal structure as shown in FIG. 1, and the tread pattern shown in FIG. 3, with a tire size 240/610R17.

For comparison, a tire according to Comparative Example 2 that includes the tire internal structure shown in FIG. 1 and the tread pattern shown in FIG. 5 was produced.

In the tires according to Working Example 2 and Comparative Example 2, the configurations apart from the tread patterns were the same as with Working Example 1 and Comparative Example 1 respectively.

The wet performance on a wet road and the damage resistance of the tread portion were evaluated by the evaluation methods described below for test tires of Working Example 2 and Comparative Example 2, and the results are shown in Table 2.

### Wet Performance (Wet Road):

Each test tire was assembled onto a wheel with a rim of size 17x9JJ, and fitted to a front wheel drive vehicle of engine displacement 1600 cc fitted with a supercharger, with air pressure 220 kPa the wet performance (driving stability, driving time) was evaluated on a test course with a wet road (road surface wet but no water depth). The driving stability was evaluated by carrying out sensory evaluation by the test driver, and the evaluation results were expressed as an index with Comparative Example 2 as 100. Larger index values indicate superior steering stability. Also, the driving time was measured as the time required to travel in a section, and the evaluation results were expressed as an index using the inverse of the measured value and Comparative example 2 as 100. Larger index values indicate a shorter driving time.

### Tread portion damage resistance:

After performing the driving tests as described above, the status of damage on the tread portions of each test tire was inspected visually, and the resistance to damage of the center land portion, the intermediate land portions and the shoulder land portions were each evaluated. The evaluation results and the damage status were expressed based on a five point method in which the evaluation was classified into five levels. The larger the evaluation points the less the damage.

**[Table 2]**

| | | Comparative Example 2 | Working Example 2 |
|---|---|---|---|
| Tread pattern | | FIG. 5 | FIG. 3 |
| Wet performance (water depth 2 mm) | Steering stability | 100 | 107 |
| | Driving time | 100 | 109 |
| Tread portion damage resistance | Center land portion | 1 | 3 |
| | Intermediate land portion | 1 | 3 |
| | Shoulder land portion | 3 | 5 |

As can be seen from Table 2, the tire according to Working Example 2 has better wet performance compared with Comparative Example 2, and moreover has better damage resistance in the tread portion.

### REFERENCE NUMERALS

- 1: Tread portion
- 1A: Cap tread rubber layer
- 2: Side wall portion
- 3: Bead portion
- 4: Carcass layer
- 5: Bead core
- 6: Bead filler
- 7: Belt layer
- 11: Main groove
- 12: Center land portion
- 13: Intermediate land portion
- 14: Shoulder land portion
- 21: Inclined groove (first inclined groove)
- 22: Inclined groove (second inclined groove)
- E: Tire equator line
- CE: Ground contact edge
- R: Direction of rotation

## Claims

1. A pneumatic tire having a designated rotational direction (R), comprising:
a ring-shaped tread portion (1) that extends in a tire circumferential direction;
a pair of side wall portions disposed on both sides of the tread portion (1); and
a pair of bead portions (3) disposed on an inside in the tire radial direction of the side wall portions; wherein
at least four main grooves (11) are provided at the tread portion (1) extending in the tire circumferential direction;
a center land portion (12) located on a tire equator line (E) in the tread portion (1), shoulder land portions (14) located at shoulder regions of the tread portion (1), and intermediate land portions (13) located between the center land portion (12) and the shoulder land portions (14) are segmentalized by the main grooves (11);
the center land portion (12) has a rib structure that continues in the tire circumferential direction;
a plurality of first inclined grooves (21) is provided from a position near the tire equator line (E) in the center land portion (12) extending to an outside in a tire width direction at an inclination to a direction opposite to the rotational direction (R) and reaching at least as far as a ground contact edge (CE);
first inclined grooves (21) extending in a first direction in the tire width direction and first inclined grooves (21) extending in a second direction in the tire width direction are disposed alternately in the tire circumferential direction;
a plurality of second inclined grooves (22) is provided extending from the intermediate land portions (13) to the outside in the tire width direction at an inclination to the direction opposite to the rotational direction (R) and reaching at least as far as the ground contact edge (CE);
second inclined grooves (22) extending in a first direction in the tire width direction and second inclined grooves (22) extending in a second direction in the tire width direction are disposed alternately in the tire circumferential direction; and
the first inclined grooves (21) and the second inclined grooves (22) are disposed alternately in the tire circumferential direction; **characterized in that** a distance Wa1 in the tire width direction between the tire equator line (E) and a tip of the first inclined groove (21) in the center land portion (12) satisfies -8 mm ≤ Wa1 ≤ 8 mm.

2. The pneumatic tire according to claim 1, wherein
each of the first inclined grooves (21) and the second inclined grooves (22) extend passing through the shoulder land portion (14).

3. The pneumatic tire according to claim 1, wherein
the second inclined grooves (22) extend passing through the shoulder land portion (14), but the first inclined grooves (21) terminate within the shoulder land portion (14).

4. The pneumatic tire according to any one of claims 1 to 3, wherein
a pitch L in the tire circumferential direction of the first inclined grooves (21) is from 80 mm to 150 mm.

5. The pneumatic tire according to claim 4, wherein
pitches La and Lb in the tire circumferential direction between the first inclined grooves (21) and the second inclined grooves (22) are each from 40 mm to 75 mm.

6. The pneumatic tire according to any one of claims 1 to 5, wherein inclination angles α and β with respect to the tire circumferential direction of the first inclined grooves (21) and the second inclined grooves (22) are each from 50° to 80°.

7. The pneumatic tire according to any one of claims 1 to 6, wherein
in the center land portion (12), a distance Wa2 in the tire width direction between the tip of the first inclined groove (21) and an edge of the center land portion (12) facing the tip satisfies 5 mm ≤ Wa2.

8. The pneumatic tire according to any one of claims 1 to 7, wherein
in the intermediate land portions (13), a distance Wb1 in the tire width direction between a tip of the second inclined groove (22) and a center position in the tire width direction of the intermediate land portion (13) satisfies -5 mm ≤ Wb1.

9. The pneumatic tire according to any one of claims 1 to 8, wherein
in the intermediate land portions (13), a distance Wb2 in the tire width direction between the tip of the second inclined groove (22) and an edge of the intermediate land portion (13) facing the tip satisfies 5 mm ≤ Wb2.

10. The pneumatic tire according to any one of claims 1 to 9, wherein
a carcass layer (4) that includes a plurality of reinforcing cords that are inclined with respect to the tire radial direction is disposed between the pair of bead portions (3), and an angle of inclination of the reinforcing cords of the carcass layer (4) with respect to the tire radial direction at a tire maximum width position is from 4° to 30°.

11. The pneumatic tire according to any one of claims 1 to 10, wherein
a groove area ratio in the tread portion (1) is from 35% to 55%.

12. The pneumatic tire according to any one of claims 1 to 11, wherein
a cap tread rubber layer (1A) disposed in the tread portion (1) has a JIS hardness of from 50 to 65.

## Patentansprüche

1. Luftreifen mit einer vorgegeben Drehrichtung (R), umfassend:
einen ringförmigen Laufflächenabschnitt (1), der sich in einer Reifenumfangsrichtung erstreckt;
ein Paar Seitenwandabschnitte, das auf beiden Seiten des Laufflächenabschnitts (1) angeordnet ist; und
ein Paar Reifenwulstabschnitte (3), das auf einer Innenseite in der Reifenradialrichtung der Seitenwandabschnitte angeordnet ist; wobei mindestens vier Hauptrillen (11) an dem Laufflächenabschnitt (1) bereitgestellt werden, der sich in der Reifenumfangsrichtung erstreckt;
ein mittlerer Stegabschnitt (12), der sich auf einer Reifenäquatorlinie (E) in dem Laufflächenabschnitt (1) befindet, Schulterstegabschnitte (14), die sich an Stegabschnitten des Laufflächenabschnitts (1) befinden und zwischenliegende Stegabschnitte (13), die sich zwischen dem mittleren Stegabschnitt (12) und den Schulterstegabschnitten (14) befinden, durch die Hauptrillen (11) segmentiert sind;
der mittlere Stegabschnitt (12) eine Rippenstruktur aufweist, die sich in der Reifenumfangsrichtung fortsetzt;
eine Mehrzahl von ersten geneigten Rillen (21) aus einer Position nahe der Reifenäquatorlinie (E) in dem mittleren Stegabschnitt (12), der sich zu einer Außenseite in einer Reifenbreitenrichtung bei einer Neigung zu einer zur Drehrichtung (R) entgegengesetzten Richtung erstreckt und mindestens soweit wie ein Bodenkontaktrand (contact edge, CE) reicht, bereitgestellt ist;
erste geneigte Rillen (21), die sich in einer ersten Richtung in die Reifenbreitenrichtung erstrecken und erste geneigte Rillen (21), die sich in einer zweiten Richtung in die Reifenbreitenrichtung erstrecken, abwechselnd in der Reifenumfangsrichtung angeordnet sind;
eine Mehrzahl von zweiten geneigten Rillen (22) bereitgestellt ist, die sich aus den zwischenliegenden Stegabschnitten (13) zur Außenseite in die Reifenbreitenrichtung bei einer Neigung in die zur Drehrichtung (R) entgegengesetzten Richtung erstrecken und mindestens soweit wie der Bodenkontaktrand (CE) reichen;
zweite geneigte Rillen (22), die sich in einer ersten Richtung in die Reifenbreitenrichtung erstrecken und zweite geneigte Rillen (22), die sich in einer zweiten Richtung in die Reifenbreitenrichtung erstrecken, abwechselnd in der Reifenumfangsrichtung angeordnet sind; und
die ersten geneigten Rillen (21) und die zweiten geneigten Rillen (22) abwechselnd in der Reifenumfangsrichtung angeordnet sind; **dadurch gekennzeichnet, dass** ein Abstand Wa1 in der Reifenbreitenrichtung zwischen der Reifenäquatorlinie (E) und einer Spitze der ersten geneigten Rille (21) in dem mittleren Stegabschnitt (12) -8 mm ≤ Wa1 ≤ 8 mm genügt.

2. Luftreifen nach Anspruch 1, wobei
jede der ersten geneigten Rillen (21) und der zweiten geneigten Rillen (22) sich durch die Schulterstegabschnitte (14) laufend erstrecken.

3. Luftreifen nach Anspruch 1, wobei
die zweiten geneigten Rillen (22) sich durch den Schulfierstegabschnitt (14) laufend erstrecken, aber die ersten geneigten Rillen (21) innerhalb des Schulterstegabschnitts (14) blind enden.

4. Luftreifen nach einem der Ansprüche 1 bis 3, wobei
ein Teilungsabstand L der ersten geneigten Rillen (21) in der Reifenumfangsrichtung von 80 mm bis 150 mm beträgt.

5. Luftreifen nach Anspruch 4, wobei
Teilungsabstände La und Lb in der Reifenumfangsrichtung zwischen den ersten geneigten Rillen (21) und den zweiten geneigten Rillen (22) jeweils von 40 mm bis 75 mm betragen.

6. Luftreifen nach einem der Ansprüche 1 bis 5, wobei Neigungswinkel α und β bezüglich der Reifenumfangsrichtung der ersten geneigten Rillen (21) und der zweiten geneigten Rillen (22) jeweils von 50° bis 80° betragen.

7. Luftreifen nach einem der Ansprüche 1 bis 6, wobei
in dem mittleren Stegabschnitt (12) ein Abstand Wa2 in der Reifenbreitenrichtung zwischen der Spitze der ersten geneigten Rille (21) und einem der Spitze zugewandten Rand des mittleren Stegabschnitts (12) 5 mm ≤ Wa2 genügt.

8. Luftreifen nach einem der Ansprüche 1 bis 7, wobei
in den zwischenliegenden Stegabschnitten (13) ein Abstand Wb1 in der Reifenbreitenrichtung zwischen einer Spitze der zweiten geneigten Rille (22) und einer mittleren Position in der Reifenbreitenrichtung des zwischenliegenden Stegabschnitts (13) -5 mm ≤ Wb1 genügt.

9. Luftreifen nach einem der Ansprüche 1 bis 8, wobei
in den zwischenliegenden Stegabschnitten (13) ein Abstand Wb2 in der Reifenbreitenrichtung zwischen der Spitze der zweiten geneigten Rille (22) und einem der Spitze zugewandten Rand des mittleren Stegabschnitts (13) 5 mm ≤ Wb2 genügt.

10. Luftreifen nach einem der Ansprüche 1 bis 9, wobei
eine Karkassenschicht (4), die eine Mehrzahl von verstärkenden Cordfäden einschließt, die bezüglich der Reifenradialrichtung geneigt sind, zwischen dem Paar Reifenwulstabschnitten (3) angeordnet ist, und ein Neigungswinkel der verstärkenden Cordfäden der Karkassenschicht (4) bezüglich der Reifenradialrichtung bei einer Position maximaler Reifenbreite von 4° bis 30° beträgt.

11. Luftreifen nach einem der Ansprüche 1 bis 10, wobei
ein Rillenflächenverhältnis in dem Laufflächenabschnitt (1) von 35 % bis 55 % beträgt.

12. Luftreifen nach einem der Ansprüche 1 bis 11, wobei
eine Laufflächenkautschuk-Verschlussschicht (1A) in dem Laufflächenabschnitt (1) eine JIS-Härte von 50 bis 65 aufweist.

## Revendications

1. Bandage pneumatique ayant un sens de rotation (R) désigné, comprenant :
une partie de bande de roulement (1) de forme annulaire qui s'étend dans un sens circonférentiel du bandage ;
une paire de parties de flanc disposées des deux côtés de la partie de bande de roulement (1) ; et
une paire de parties de talon (3) disposées sur un intérieur dans le sens radial du bandage des parties de flanc ; dans lequel
au moins quatre rainures principales (11) sont fournies au niveau de la partie de bande de roulement (1) s'étendant dans le sens circonférentiel du bandage ;
une partie de blocs centraux (12) située sur une ligne équatoriale (E) du bandage dans la partie de bande de roulement (1), des parties de blocs d'épaulement (14) situées au niveau de régions d'épaulement de la partie de bande de roulement (1) et des parties de blocs intermédiaires (13) situées entre la partie de blocs centraux (12) et les parties de blocs d'épaulement (14) sont segmentées par les rainures principales (11) ;
la partie de blocs centraux (12) a une structure nervurée qui continue dans le sens circonférentiel du bandage ;
une pluralité de premières rainures inclinées (21) est fournie à partir d'une position proche de la ligne équatoriale (E) du bandage dans la partie de blocs centraux (12) s'étendant vers un extérieur dans un sens de largeur du bandage suivant une inclinaison dans un sens opposé au sens de rotation (R) et allant au moins aussi loin qu'un bord de contact avec le sol (CE) ;
des premières rainures inclinées (21) s'étendant dans une première direction dans le sens de la largeur du bandage et des premières rainures inclinées (21) s'étendant dans une seconde direction dans le sens de la largeur du bandage sont disposées en alternance dans le sens circonférentiel du bandage ;
une pluralité de secondes rainures inclinées (22) est fournie s'étendant depuis les parties de blocs intermédiaires (13) vers l'extérieur dans le sens de la largeur du bandage suivant une inclinaison dans le sens opposé au sens de rotation (R) et allant au moins aussi loin que le bord de contact avec le sol (CE) ;
des secondes rainures inclinées (22) s'étendant dans une première direction dans le sens de la largeur du bandage et des secondes rainures inclinées (22) s'étendant dans une seconde direction dans le sens de la largeur du bandage sont disposées en alternance dans le sens circonférentiel du bandage ; et
les premières rainures inclinées (21) et les secondes rainures inclinées (22) sont disposées en alternance dans le sens circonférentiel du bandage ; **caractérisé en ce qu'**une distance Wa1 dans le sens de la largeur du bandage entre la ligne équatoriale (E) du bandage et une pointe de la première rainure inclinée (21) dans la partie de blocs centraux (12) satisfait -8 mm ≤ Wa1 ≤ 8 mm.

2. Bandage pneumatique selon la revendication 1, dans lequel
chacune des premières rainures inclinées (21) et des secondes rainures inclinées (22) s'étend en passant à travers la partie de blocs d'épaulement (14).

3. Bandage pneumatique selon la revendication 1, dans lequel
les secondes rainures inclinées (22) s'étendent en passant à travers la partie de blocs d'épaulement (14), mais les premières rainures inclinées (21) se terminent à l'intérieur de la partie de blocs d'épaulement (14).

4. Bandage pneumatique selon l'une quelconque des revendications 1 à 3, dans lequel
un pas L dans le sens circonférentiel du bandage des premières rainures inclinées (21) va de 80 mm à 150 mm.

5. Bandage pneumatique selon la revendication 4, dans lequel
des pas La et Lb dans le sens circonférentiel du bandage entre les premières rainures inclinées (21) et les secondes rainures inclinées (22) vont chacun de 40 mm à 75 mm.

6. Bandage pneumatique selon l'une quelconque des revendications 1 à 5, dans lequel des angles d'inclinaison α et β par rapport au sens circonférentiel du bandage des premières rainures inclinées (21) et des secondes rainures inclinées (22) vont chacun de 50° à 80°.

7. Bandage pneumatique selon l'une quelconque des revendications 1 à 6, dans lequel
dans la partie de blocs centraux (12), une distance Wa2 dans le sens de la largeur du bandage entre la pointe de la première rainure inclinée (21) et un bord de la partie de blocs centraux (12) faisant face à la pointe satisfait 5 mm ≤ Wa2.

8. Bandage pneumatique selon l'une quelconque des revendications 1 à 7, dans lequel
dans les parties de blocs intermédiaires (13), une distance Wb1 dans le sens de la largeur du bandage entre une pointe de la seconde rainure inclinée (22) et une position centrale dans le sens de la largeur du bandage de la partie de blocs intermédiaires (13) satisfait -5 mm ≤ Wb1.

9. Bandage pneumatique selon l'une quelconque des revendications 1 à 8, dans lequel
dans les parties de blocs intermédiaires (13), une distance Wb2 dans le sens de la largeur du bandage entre la pointe de la seconde rainure inclinée (22) et un bord de la partie de blocs intermédiaires (13) faisant face à la pointe satisfait 5 mm ≤ Wb2.

10. Bandage pneumatique selon l'une quelconque des revendications 1 à 9, dans lequel
une nappe de carcasse (4) qui inclut une pluralité de câbles de renforcement qui sont inclinés par rapport au sens radial du bandage est disposée entre la paire de parties de talon (3) et un angle d'inclinaison des câbles de renforcement de la nappe de carcasse (4) par rapport au sens radial du bandage à une position de largeur maximale du bandage va de 4° à 30°.

11. Bandage pneumatique selon l'une quelconque des revendications 1 à 10, dans lequel
un rapport de surface de rainure dans la partie de bande de roulement (1) va de 35 % à 55 %.

12. Bandage pneumatique selon l'une quelconque des revendications 1 à 11, dans lequel
une nappe de caoutchouc de renforcement de bande de roulement (1A) disposée dans la partie de bande de roulement (1) a une dureté JIS de 50 à 65.
